# EUROPÄISCHE PATENTANMELDUNG

(11) **EP 0 568 890 A1**
(43) Veröffentlichungstag der Anmeldung: **10.11.1993**
(21) Anmeldenummer: 93106711.0
(22) Anmeldetag: 26.04.1993
(51) Int. Cl.: F16L 37/10, F16L 37/23

(54) **Kupplung für eine Vakuum-Flüssigkeitsleitung**

(30) Priorität: 02.05.1992 DE 4214256
(71) Anmelder: Michael, Harald, D-22587 Hamburg (DE)
(72) Erfinder: Michael, Harald, D-22587 Hamburg (DE)
(74) Vertreter: Jochem, Bernd, Dipl.-Wirtsch.-Ing.

(57) **Zusammenfassung**

Die Kupplung für eine Vakuum-Flüssigkeitsleitung hat ein rohrförmiges erstes Kupplungsteil (10), welches mit radialem Spiel axial bis in eine dichte Anlagestellung in eine ringförmige Nut (14) in der Stirnfläche eines buchsenförmigen zweiten Kupplungsteils (12) einschiebbar und in dieser Stellung verriegelbar ist. Um das Lösen der Kupplung zu erleichtern und besser kontrollieren zu können, ist vorgesehen, daß auf einem der Kupplungsteile (10, 12) ein Trennring (24) axial fest, aber drehbar gelagert ist. Er hat eine nockenförmige Seitenfläche (34), die sich bei Drehung des Trennrings (24) an einer am anderen Kupplungsteil (10) angebrachten Gegenfläche (36) abstützt und die beiden Kupplungsteile (10, 12) durch Keilwirkung auseinanderdrückt.

## Beschreibung

Die Erfindung betrifft eine Kupplung für eine Vakuum-Flüssigkeitsleitung mit einem rohrförmigen ersten Kupplungsteil, welches mit radialem Spiel axial bis in eine dichte Anlagestellung in eine ringförmige Nut in der Stirnfläche eines buchsenförmigen zweiten Kupplungsteils einschiebbar und in dieser Stellung verriegelbar ist.

Eine derartige Kupplung ist in der EP 0 341 595 B1 beschrieben und dort in Fig. 5 dargestellt. Sie hat die Aufgabe, beim Trennen der Kupplungsteile Luft durch die zwischen ihnen bestehenden radialen Spalte eindringen zu lassen, welche eventuell im Bereich der Kupplung zurückgebliebenes Abwasser mitreißt und dadurch dessen Abtropfen verhindert und für Selbstreinigung der Kupplungsteile sorgt. Die Kupplung wird deshalb vorzugsweise in Strömungsrichtung unmittelbar hinter einem Ventil auf seiten eines abzusaugenden Abwasserbehälters und in Strömungsrichtung vor einem weiteren Ventil angeordnet, welches selbsttätig schließt, wenn in der Vakuumleitung nur noch Luft hindurchgesaugt wird und es dadurch zu einem Druckanstieg in einer Steuereinrichtung des Ventils kommt. Mit solchen Ventilanordnungen werden z. B. Abwasserbehälter in Eisenbahnwagen und die Vakuumleitungen zu deren Entleerung ausgerüstet. Dabei wird auch das Ventil auf seiten des Eisenbahnwagens, an welches zum Entleeren die Vakuumleitung ankuppelbar ist, automatisch geschlossen, wenn nach dem Absaugen des Abwassers Luft nachgesaugt wird und dadurch der Druck an der Steuereinrichtung des Ventils steigt. Es ist jedoch durch eine Drossel oder andere geeignete Maßnahmen dafür gesorgt, daß das Ventil am Eisenbahnwagen schon schließt, bevor das Ventil an der angekuppelten Vakuumleitung schließen kann, so daß das letztere erst schließt, wenn über die geöffnete Kupplung Luft in die Vakuumleitung gelangt.

Es hat sich nun gezeigt, daß es praktische Schwierigkeiten bereitet, die Kupplung tatsächlich auch so zu öffnen, daß sie bestimmungsgemäß funktioniert. Es bedarf dazu einer gewissen Erfahrung und Geschicklichkeit, die bei dem zur Leerung der Abwasserbehälter eingesetzten Personal nicht immer vorausgesetzt werden kann. Die Schwierigkeiten sind darauf zurückzuführen, daß zunächst in der dichten Anlagestellung der Kupplungsteile eine verhältnismäßig große Kraft aufgewendet werden muß, um die durch das im Inneren herrschende Vakuum erzeugte Kraft zu überwinden. Kaum ist jedoch die dichte Anlagestellung zwischen den Kupplungsteilen aufgehoben, läßt der zu überwindende Widerstand sehr schnell nach, und infolgedessen werden die Kupplungsteile meistens ruckartig und zu schnell getrennt. Dabei kann es dann doch vorkommen, daß noch Abwasser ausläuft, weil es entweder in der zurückgebliebenen Menge in der kurzen Zeit der ruckartigen Trennung nicht abgesaugt werden konnte oder weil das Ventil auf seiten der Vakuumleitung zu schnell schloß. Eine tropffreie Kupplung ist jedoch bei einer Anwendung, wie der vorstehend beispielhaft genannten, unbedingt erforderlich, weil man es dort mit Fäkalien-Abwasser zu tun hat und täglich eine sehr große Zahl von Abwasserbehältern in Eisenbahnwagen in Wartungsbahnhöfen zu entleeren ist. Ein einzelner Entleerungsvorgang dauert nur etwa zwei bis drei Minuten.

Der Erfindung liegt deshalb die Aufgabe zugrunde, die bekannte Kupplung dahingehend zu verbessern, daß sie sich leichter öffnen läßt und sich das tropffreie Öffnen besser kontrollieren läßt.

Vorstehende Aufgabe wird erfindungsgemäß dadurch gelöst, daß auf einem der Kupplungsteile ein Betätigungsglied beweglich gelagert ist, welches sich an einer am anderen Kupplungsteil angebrachten Gegenfläche abstützt und bei Betätigung die beiden Kupplungsteile auseinanderdrückt.

Das vorgeschlagene Betätigungsglied bietet die Möglichkeit, z. B. mittels Schrägflächen oder einer Hebelübersetzung einen längeren Betätigungsweg für die Anfangsphase der Trennung der beiden Kupplungsteile vorzusehen, womit sich die angestrebten Ziele erreichen lassen. In bevorzugter Ausgestaltung ist das Betätigungsglied ein Trennring, der auf einem der Kupplungsteile axial fest, aber drehbar gelagert, und mit einer nockenförmigen Seitenfläche ausgebildet ist, die sich bei Drehung des Trennrings an einer am anderen Kupplungsteil angebrachten Gegenfläche abstützt und die beiden Kupplungsteile durch Keilwirkung auseinanderdrückt.

Bei Benutzung des Trennrings der vorgeschlagenen Kupplung brauchen deren Teile nicht mehr mit verhältnismäßig großer Kraft auseinandergerissen zu werden, weil die Keilwirkung der nockenförmigen Seitenfläche des Trennrings die Handkraft unterstützt. Außerdem ist sichergestellt, daß die Kupplungsteile genügend langsam auseinanderbewegt werden, so daß die durch die radialen Spalte zwischen ihnen eingesaugte Luft Abwasserreste, die nach dem Schließen des behälterseitigen Ventils hinter diesem stehengeblieben sind, mitreißen und abtransportieren kann, bevor das saugseitige Ventil automatisch schließt.

In bevorzugter Ausgestaltung der Erfindung dient der Trennring gleichzeitig der Entriegelung der Kupplungsteile. Zu diesem Zweck wird vorgeschlagen, daß er auf dem buchsenförmigen zweiten Kupplungsteil gelagert ist und im gekuppelten Zustand mit einem Teil seines Umfangs wenigstens ein im radial äußeren Bereich dieses Kupplungsteils radial beweglich geführtes Verriegelungselement in Eingriff mit einer Ausnehmung im ersten Kupplungsteil hält, aber auf einem anderen Teil seines Umfangs mit einer Aussparung versehen ist, welche bei Drehung des Trennrings zum Entkuppeln das Verriegelungselement aus der Ausnehmung im ersten Kupplungsteil heraustreten läßt. Als Verriegelungselemente können z. B. mehrere über den Umfang verteilte Kugeln vorhanden sein.

In weiterer bevorzugter Ausgestaltung der Erfindung ist an dem Trennring ein radial abstehender Handgriff angebracht, welcher die Handhabung noch weiter erleichtert.

Ein Ausführungsbeispiel der Erfindung wird nachstehend anhand der Zeichnung näher erläutert. Diese zeigt als
- Fig. 1: eine Kupplung einer Unterdruck-Abwasserleitung im Längsschnitt und in Seitenansicht im gekuppelten Zustand und als
- Fig. 2: die Kupplung nach Fig. 1 im Längsschnitt in einer Zwischenstellung während des Lösens.

Die gezeigte Kupplung besteht aus einem rohrförmigen ersten Kupplungsteil 10 und einem buchsenförmigen zweiten Kupplungsteil 12. Das Kupplungsteil 10 ist mit einer zu einem Abwasserbehälter führenden Leitung verbunden, während das Kupplungsteil 12 mit einer Unterdruck- bzw. Vakuumleitung verbunden ist. Vorzugsweise befindet sich dabei zu beiden Seiten der Kupplung jeweils ein Ventil von der in der EP 0 341 595 B1 beschriebenen Art.

Das Kupplungsteil 12 ist auf der mit Bezug auf die Zeichnung linken Seite mit einer ringförmigen Nut 14 ausgebildet, die sich von der Stirnfläche aus axial in den Körper des Kupplungsteils hineinzieht und eine solche Lage und radiale Breite hat, daß das rohrförmige Kupplungsteil 10 mit innerem und äußerem radialen Spiel darin axial einführbar ist. Es ist für die Funktion und somit auch für die Erfindung unerheblich, ob das Kupplungsteil 12 einteilig hergestellt oder, wie gezeigt, aus zwei fest miteinander verbundenen Teilen, von denen das radial innere den Durchflußkanal 16 begrenzt und die radial innere Wand der ringförmigen Nut 14 bildet, zusammengesetzt ist. Als Material für die Kupplungsteile 10 und 12 kommt vorzugsweise Metall oder Kunststoff in Frage.

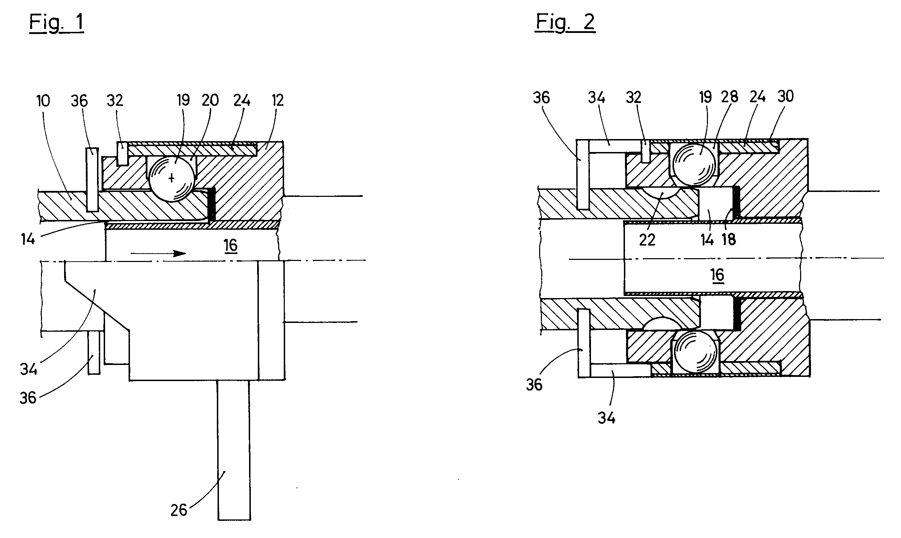

Auf dem Boden der ringförmigen Nut 14 ist eine elastische Dichtung 18 angebracht, an welcher das Stirnende des rohrförmigen Kupplungsteils 10 im gekuppelten Zustand nach Fig. 1 dicht anliegt. Die Verriegelung der beiden Kupplungsteile 10, 12 in diesem Zustand erfolgt durch mehrere über den Umfang verteilte Kugeln 19, die radial beweglich, aber unverlierbar in radialen Bohrungen im Kupplungsteil 12 geführt sind und in passende kalottenförmige Ausnehmungen 22 im Kupplungsteil 10 eingreifen können. In dem in Fig. 1 dargestellten gekuppelten und verriegelten Zustand werden die Kugeln 19 durch einen auf dem Kupplungsteil 12 drehbar gelagerten Ring 24 in Eingriff mit den Ausnehmungen 22 gehalten und am Ausweichen nach radial außen gehindert. Durch Drehung des Rings 24 mittels eines daran angeformten oder befestigten, radial abstehenden Handgriffs 26 können innenseitige Aussparungen 28 im Ring 24 zu den Kugeln 19 hingeführt werden. Daraufhin können diese radial nach außen ausweichen und das Kupplungsteil 10 freigeben, wenn dieses axial vom Kupplungsteil 12 weggezogen wird.

Der Ring 24, welcher z. B. zwischen einer Schulterfläche 30 und einem Stift 32 auf dem Kupplungsteil 12 axial festgelegt ist, dient jedoch nicht nur der Sicherung bzw. Lösung der Verriegelung der Kupplungsteile mittels Kugeln 19 oder anders geformter, radial beweglich geführter Verriegelungselemente, sondern auch als Trennring der Kupplung. Zu diesem Zweck ist die mit Bezug auf die Zeichnung linke Seitenfläche des Rings 24 diametral gegenüberliegend mit nockenförmigen axialen Vorsprüngen 34 ausgebildet. Diese Nocken wirken jeweils mit einer Gegenfläche, z. B. in Form eines Stifts 36 am ersten Kupplungsteil 10 zusammen, indem die Schrägflächen der Nocken 34 bei Drehung des Rings 24 jeweils am Stift 36 entlanggleiten, wobei der Ring 24 und mit ihm das Kupplungsteil 12 relativ zu den Stiften 36 und dem ersten Kupplungsteil 10 mit Bezug auf die Zeichnung zunehmend weiter nach rechts gedrückt werden. Somit läßt sich, ausgehend vom gekuppelten und verriegelten Zustand nach Fig. 1, mit geringer Kraft allein durch Drehung des Rings 24 mittels des Handgriffs 26 die dichte Anlage des Kupplungsteils 10 an der Dichtung 18 aufheben, ohne daß die Gefahr besteht, daß die beiden Kupplungsteile sofort ruckartig vollständig voneinander getrennt werden. Nach Aufhebung der dichten Anlage durch eine verhältnismäßig kurze axiale Relativbewegung der beiden Kupplungsteile 10, 12 wird Luft von außen durch die radialen Spalte zwischen den Kupplungsteilen eingesaugt und reißt im Bereich der Kupplung zurückgebliebenes Abwasser mit fort. Danach läßt die zwischen den Kupplungsteilen eintretende Luft das saugseitig von der Kupplung angeordnete Ventil schließen.

Es versteht sich, daß die Nocken 34 am Ring 24 die Kupplungsteile 10, 12 nicht eher axial auseinanderdrücken dürfen, als die Kugeln 19 die Ausnehmungen 22 verlassen und radial nach außen in die Aussparungen 28 hinein ausweichen können. Es bereitet jedoch keine Schwierigkeiten, Schrägflächen als Übergänge an den Ausnehmungen 22, den Aussparungen 28 oder den Bohrungen 20 derart anzubringen, daß der Anfang des Zurückweichens der Kugeln 19 während der Drehung des Rings 24 zusammenfällt mit dem Beginn des Auseinanderdrückens der beiden Kupplungsteile 10, 12 durch die gegen die Stifte 36 drückenden Nocken 34.

Die dargestellte Kupplung ist vorstehend in Anwendung bei einer Vakuum-Abwasserleitung beschrieben worden. Sie kann selbstverständlich auch anderweitig eingesetzt werden, wo Flüssigkeiten mittels Unterdruck transportiert werden und einerseits eine leichte Betätigung, andererseits Tropffreiheit beim Öffnen der Kupplung angestrebt werden.

## Patentansprüche

1. Kupplung für eine Vakuum-Flüssigkeitsleitung mit einem rohrförmigen ersten Kupplungsteil (10), welches mit radialem Spiel axial bis in eine dichte Anlagestellung in eine ringförmige Nut (14) in der Stirnfläche eines buchsenförmiges zweiten Kupplungsteils (12) einschiebbar und in dieser Stellung verriegelbar ist, **dadurch gekennzeichnet**, daß auf einem der Kupplungsteile (10, 12) ein Betätigungsglied (24) beweglich gelagert ist, welches sich an einer am anderen Kupplungsteil angebrachten Gegenfläche (36) abstützt und bei Betätigung die beiden Kupplungsteile (10, 12) auseinanderdrückt.

2. Kupplung nach Anspruch 1, **dadurch gekennzeichnet,** daß auf einem der Kupplungsteile (12) ein Trennring (24) axial fest, aber drehbar gelagert ist, welcher mit einer nockenförmigen Seitenfläche (34) ausgebildet ist, die sich bei Drehung des Trennrings (24) an einer am anderen Kupplungsteil angebrachten Gegenfläche (36) abstützt und die beiden Kupplungsteile (10, 12) durch Keilwirkung auseinanderdrückt.

3. Kupplung nach Anspruch 2, **dadurch gekennzeichnet**, daß der Trennring (24) auf dem buchsenförmigen zweiten Kupplungsteil (12) gelagert ist und im gekuppelten Zustand mit einem Teil seines Umfangs wenigstens ein im radial äußeren Bereich dieses Kupplungsteils radial beweglich geführtes Verriegelungselement (19) in Eingriff mit einer Ausnehmung (22) im ersten Kupplungsteil (10) hält, aber auf einem anderen Teil seines Umfangs mit einer Aussparung (28) versehen ist, welche bei Drehung des Trennrings (24) zum Entkuppeln das Verriegelungselement (19) aus der Ausnehmung (22) im ersten Kupplungsteil (10) heraustreten läßt.

4. Kupplung nach Anspruch 3, **dadurch gekennzeichnet**, daß mehrere Kugeln (19), über den Umfang verteilt, als Verriegelungselemente vorhanden sind.

5. Kupplung nach einem der Ansprüche 2 bis 4, **dadurch gekennzeichnet**, daß am Trennring (24) ein radial abstehender Handgriff (26) angebracht ist.
